# EUROPEAN PATENT APPLICATION

(11) **EP 4 557 409 A1**
(43) Date of publication of application: **21.05.2025**
(21) Application number: 23839313.6
(22) Date of filing: 23.05.2023
(51) Int. Cl.: H01M 4/92, B01J 23/42, B01J 37/02, B01J 37/08, B01J 37/16, H01M 4/86, H01M 4/88, H01M 4/96, H01M 8/10

(54) **FUEL CELL ELECTRODE CATALYST**

(30) Priority: 11.07.2022 JP 2022111131
(71) Applicant: CATALER CORPORATION, Kakegawa-shi, Shizuoka 437-1492 (JP)
(72) Inventor: HORI, Akihiro, Kakegawa-shi, Shizuoka 437-1492 (JP); SASAKAWA, Ren, Kakegawa-shi, Shizuoka 437-1492 (JP); YAMAMOTO, Kenji, Kakegawa-shi, Shizuoka 437-1492 (JP)
(74) Representative: Ricker, Mathias
(86) International application number: PCT/JP2023/019106
(87) International publication number: WO 2024/014136

(57) **Abstract**

This fuel cell electrode catalyst has catalytic metal particles made from Pt or a Pt alloy supported on a carbon carrier, wherein when XRD measurements are taken for the electrode catalyst, the peak intensity ratio of the Pt (111) surface represented by the formula Pt(111) peak intensity ratio = Pt(111) peak intensity/(Pt(111) peak intensity + Pt(200) peak intensity + Pt (220) peak intensity) was 0.626-0.630.

## Description

### FIELD

The present invention relates to a fuel cell electrode catalyst.

### BACKGROUND

Fuel cells are considered promising as next-generation types of cells. Solid polymer fuel cells, in particular, have the advantages of low operating temperature, short start-up time and compactness, and have already begun to be implemented in fields such as automobile drive power supplies.

Solid polymer fuel cells have a structure with a cathode (air electrode), a solid polymer electrolyte membrane and an anode (fuel electrode) laminated in that order. In a solid polymer fuel cell, oxygen or air is supplied to the cathode while fuel such as hydrogen is supplied to the anode, whereupon oxidation-reduction reaction takes place at the electrodes, generating electric power.

The electrodes in a fuel cell include a fuel cell electrode catalyst to promote the oxidation-reduction reaction. Commonly used fuel cell electrode catalysts have a structure with catalyst metal particles supported on a carbon carrier. Pt particles and Pt alloy particles are known types of catalyst metal particles for fuel cell electrode catalysts.

PTL 1, for example, describes a method for producing a Pt-supported catalyst wherein a Pt precursor compound is reduced in a liquid phase in the presence of carrier particles to reductively support the Pt on the carrier particles. PTL 2 describes a method for producing a fuel cell catalyst wherein Pt alloy particles are used as the catalyst metal particles, in order to increase activity of the cathode of the solid polymer fuel cell, and firing is carried out after supporting the Pt and alloy metal on carrier particles.

### [CITATION LIST]

### [PATENT LITERATURE]

[PTL 1] Japanese Unexamined Patent Publication HEI No. 08-084930
[PTL 2] Japanese Unexamined Patent Publication No. 2003-142112

### SUMMARY

### [TECHNICAL PROBLEM]

According to PTL 1, a fuel cell catalyst produced by a method of reductively supporting Pt on carrier particles in a liquid phase does not always exhibit the expected activity. Using the fuel cell catalyst as a cathode catalyst may even notably lower the catalytic activity in some cases.

It is an object of the present invention, which has been devised in light of the situation described above, to provide a fuel cell catalyst that has high catalytic activity and exhibits the expected catalytic activity even when used as a cathode catalyst.

### [SOLUTION TO PROBLEM]

The present invention is as follows.

### <Aspect 1>

A fuel cell electrode catalyst having catalyst metal particles made of Pt or Pt alloy supported on a carbon carrier,
wherein upon XRD measurement of the electrode catalyst, the peak intensity ratio on the Pt (111) plane according to the following formula is 0.626 or higher and 0.630 or lower: Pt(111) peak intensity ratio = Pt(111) peak intensity/(Pt(111) peak intensity + Pt(200) peak intensity + Pt(220) peak intensity).

### <Aspect 2>

The fuel cell electrode catalyst according to aspect 1, wherein upon XRD measurement of the electrode catalyst, the peak intensity ratio on the Pt(200) plane according to the following formula is 0.240 or higher and 0.243 or lower: Pt(200) peak intensity ratio = Pt(200) peak intensity/(Pt(111) peak intensity + Pt(200) peak intensity + Pt(220) peak intensity).

### <Aspect 3>

The fuel cell electrode catalyst according to aspect 1, wherein upon XRD measurement of the electrode catalyst, the peak intensity ratio on the Pt(220) plane according to the following formula is 0.129 or higher and 0.132 or lower: Pt(220) peak intensity ratio = Pt(220) peak intensity/(Pt(111) peak intensity + Pt(200) peak intensity + Pt(220) peak intensity).

### <Aspect 4>

The fuel cell electrode catalyst according to any one of aspects 1 to 3, wherein the particle size of the catalyst metal particles is 3.0 nm or larger and 5.0 nm or smaller.

### <Aspect 5>

The fuel cell electrode catalyst according to any one of aspects 1 to 3, wherein the carbon carrier consists of conductive carbon black particles obtained by the furnace method.

### <Aspect 6>

The fuel cell electrode catalyst according to any one of aspects 1 to 3, wherein the loading amount of the catalyst metal particles is 1.0 mass% or greater and 50 mass% or less, as represented by the ratio of the mass of the catalyst metal particles with respect to the total mass of the electrode catalyst.

### <Aspect 7>

A fuel cell cathode having a catalyst layer that includes a fuel cell electrode catalyst according to any one of aspects 1 to 3.

### <Aspect 8>

A fuel cell electrode assembly that includes a cathode according to aspect 7.

### <Aspect 9>

A fuel cell that includes a fuel cell electrode assembly according to aspect 8.

### <Aspect 10>

A method for producing a fuel cell electrode catalyst, the method comprising:
contacting a carbon carrier with a catalyst metal precursor,
reducing the catalyst metal precursor and supporting the catalyst metal particles on the carbon carrier to obtain an electrode catalyst precursor, and
firing the electrode catalyst precursor under conditions with an oxygen partial pressure of 4.0 Pa or higher and 800 Pa or lower, at a temperature of 500°C or higher and 1,100°C or lower.

### <Aspect 11>

The method for producing a fuel cell electrode catalyst according to aspect 10, wherein the firing is carried out under reduced pressure.

### <Aspect 12>

The method for producing a fuel cell electrode catalyst according to aspect 10, wherein the firing is carried out under an inert gas flow.

### [ADVANTAGEOUS EFFECTS OF INVENTION]

The present invention provides a fuel cell catalyst having high catalytic activity without causing lower activity during operation even when used as a cathode catalyst.

### DESCRIPTION OF EMBODIMENTS

### <Fuel cell electrode catalyst>

The fuel cell catalyst of the invention is a fuel cell electrode catalyst having catalyst metal particles made of Pt or Pt alloy supported on a carbon carrier,
wherein upon XRD measurement of the electrode catalyst, the peak intensity ratio on the Pt(111) plane according to the following formula is 0.626 or higher and 0.630 or lower: Pt(111) peak intensity ratio = Pt(111) peak intensity/(Pt(111) peak intensity + Pt(200) peak intensity + Pt(220) peak intensity).

The fuel cell catalyst of the invention may be produced, for example, by a method comprising:
contacting a carbon carrier with a catalyst metal precursor,
reducing the catalyst metal precursor and supporting the catalyst metal particles on the carbon carrier to obtain an electrode catalyst precursor, and
firing the electrode catalyst precursor under conditions with an oxygen partial pressure of 4.0 Pa or higher and 800 Pa or lower, at a temperature of 300°C or higher and 1,100°C or lower.

As stated above, a fuel cell electrode catalyst produced by a method of reductively supporting Pt on carrier particles in a liquid phase without subsequent firing, does not always exhibit the expected activity. In particular, using the electrode catalyst as a cathode catalyst notably lowers the catalytic activity during operation of the fuel cell.

Investigation by the present inventors has shown that with catalyst metal particles in a fuel cell electrode catalyst produced by a Pt reductive loading method without a firing step, the most stable Pt(111) plane grows preferentially during reductive loading of the Pt on the particle carrier. A high percentage of exposure of the Pt(111) plane is known to lower the catalytic activity. This is also validated in the Examples described below.

It was therefore considered to fire Pt-loaded carbon (electrode catalyst precursor) obtained by reductive loading of Pt on a particle carrier to grow the Pt particle diameters while adjusting the crystallinity of the Pt.

One concern is that a significant amount oxygen remaining in the atmosphere during firing might lead to combustion of the carbon carrier, and cause coarsening of the catalyst metal particles. However, further investigation by the present inventors showed that a very low oxygen content in the atmosphere during firing results in preferential growth of the Pt(111) plane, and therefore the problem was not solved.

According to the invention, firing of a Pt-loaded carbon (electrode catalyst precursor) obtained by reductive loading of Pt onto a particle carrier is carried out under conditions with an oxygen partial pressure of 4.0 Pa or higher and 800 Pa or lower. Since combustion of the carbon carrier is inhibited while the ratio of the Pt(111) plane is adjusted to within a suitable range with a fuel cell electrode catalyst obtained by this production method, the peak intensity ratio of the catalyst metal particles in the resulting fuel cell electrode catalyst on the Pt(111) plane, as measured by XRD and represented by the following formula, is 0.626 or higher and 0.630 or lower: Pt(111) peak intensity ratio = Pt(111) peak intensity/(Pt(111) peak intensity + Pt(200) peak intensity + Pt(220) peak intensity).

### <Carbon carrier>

The carbon carrier in the fuel cell electrode catalyst of the invention may be carbon black, graphite, carbon fibers, active carbon, amorphous carbon or a nanocarbon material, for example. Nanocarbon materials include carbon nanotubes, graphene and fullerene.

Carbon black is particularly suitable for use as the carbon carrier of the invention. The carbon black may be carbon black obtained by a furnace method, or carbon black obtained by a channel method, an acetylene method or a thermal method. The carbon carrier of the invention is most preferably particles of conductive carbon black obtained by a furnace method.

The carbon carrier of the invention has a specific surface area of 10 m²/g or greater, 20 m²/g or greater, 30 m²/g or greater, 40 m²/g or greater, 50 m²/g or greater, 100 m²/g or greater, 150 m²/g or greater or 200 m²/g or greater, and 1,700 m²/g or lower, 1,600 m²/g or lower, 1,500 m²/g or lower, 1,400 m²/g or lower, 1,200 m²/g or lower, 1,000 m²/g or lower, 800 m²/g or lower, 600 m²/g or lower, 500 m²/g or lower, 400 m²/g or lower, 300 m²/g or lower, 250 m²/g or lower or 200 m²/g or lower, as measured by the BET method using nitrogen as the adsorbate.

The specific surface area of the carbon carrier may be 10 m²/g or greater and 1,700 m²/g or lower, 50 m²/g or greater and 1,500 m²/g or lower or 100 m²/g or greater and 1,400 m²/g or lower.

The particle size of the carbon carrier may be 5 nm or larger, 10 nm or larger, 20 nm or larger, 30 nm or larger or 50 nm or larger, and 300 nm or smaller, 200 nm or smaller, 100 nm or smaller or 50 nm or smaller, as the number-average primary particle size measured under an electron microscope.

The particle size of the carbon carrier can be calculated as the equivalent diameter number average, based on an electron microscope image taken of the fuel cell electrode catalyst. The "equivalent diameter" is the diameter of a perfect circle having a peripheral length equal to the peripheral length of the measured figure.

### <Catalyst metal particles>

The catalyst metal particles are made of Pt or a Pt alloy, and are supported on the carbon carri er.

When the catalyst metal particles are made of a Pt alloy, the Pt alloy may be an alloy including:
Pt, and
one or more metals selected from the group consisting of Ti, Cr, Mo, W, Mn, Fe, Co, Ni, Cu, Ga, Zr, Hf, Ru, Ir, Pd, Os, Rh and Sn.

A Pt alloy will typically be Pt-Fe alloy, Pt-Co alloy or Pt-Ni alloy.

The proportion of Pt atoms in the Pt alloy may be 50 mol% or greater, 60 mol% or greater, 70 mol% or greater, 75 mol% or greater, 80 mol% or greater or 85 mol% or greater, and 99 mol% or lower, 95 mol% or lower, 90 mol% or lower, 85 mol% or lower, 80 mol% or lower or 75 mol% or lower, as the percentage of the number of moles of Pt atoms with respect to the total number of moles of metal atoms in the Pt alloy.

The mean particle size of the catalyst metal particles may be 1.0 nm or larger, 1.5 nm or larger, 2.0 nm or larger, 2.5 nm or larger or 3.0 nm or larger, and 10.0 nm or smaller, 8.0 nm or smaller, 6.0 nm or smaller, 5.0 nm or smaller, 4.5 nm or smaller or 4.0 nm or smaller. Catalyst metal particles having a mean particle size of 10.0 nm or smaller are advantageous in terms of high specific activity. Catalyst metal particles having a mean particle size of 1.0 nm or larger are advantageous in terms of excellent maintenance of specific activity when the fuel cell is operated for long periods.

The mean particle size of the catalyst metal particles may be 3.0 nm or larger and 5.0 nm or smaller, for example.

When the catalyst metal particles are Pt particles, the mean particle size of the catalyst metal particles can be calculated by the Scherrer formula based on the line width of the diffraction peak for the (220) plane of Pt in XRD measurement of the fuel cell electrode catalyst. When the catalyst metal particles are made of a Pt alloy, the mean particle size of the catalyst metal particles can be calculated by small angle X-ray scattering or transmission electron microscopy (TEM).

As stated above, upon XRD measurement of the fuel cell electrode catalyst of the invention, the peak intensity ratio on the Pt(111) plane is 0.626 or higher and 0.630 or lower, as represented by the following formula. Pt(111) peak intensity ratio = Pt(111) peak intensity/(Pt(111) peak intensity + Pt(200) peak intensity + Pt(220) peak intensity)

If the peak intensity ratio on the Pt(111) plane is in the range of 0.626 or higher and 0.630 or lower, then the catalytic activity of the fuel cell electrode catalyst will be high, with high catalytic activity being maintained for long periods even when the electrode catalyst of the invention is used as a fuel cell cathode.

Upon XRD measurement of the fuel cell electrode catalyst of the invention, the peak intensity ratio on the Pt(200) plane may be 0.240 or higher and 0.243 or lower, as represented by the following formula. Pt(200) peak intensity ratio = Pt(200) peak intensity/(Pt(111) peak intensity + Pt(200) peak intensity + Pt(220) peak intensity)

If the peak intensity ratio on the Pt(200) plane is in the range of 0.240 or higher and 0.243 or lower, the catalytic activity of the fuel cell electrode catalyst will be higher.

Upon XRD measurement of the fuel cell electrode catalyst of the invention, the peak intensity ratio on the Pt(220) plane may be 0.129 or higher and 0.132 or lower, as represented by the following formula. Pt(220) peak intensity ratio = Pt(220) peak intensity/(Pt(111) peak intensity + Pt(200) peak intensity + Pt(220) peak intensity)

If the peak intensity ratio on the Pt(220) plane is in the range of 0.129 or higher and 0.132 or lower, the catalytic activity of the fuel cell electrode catalyst will be even higher.

The catalyst metal particles in the fuel cell electrode catalyst of the invention are supported on a carbon carrier.

The loading amount of the catalyst metal particles in the fuel cell electrode catalyst of the invention may be 1.0 mass% or greater, 5.0 mass% or greater, 10 mass% or greater, 15 mass% or greater, 20 mass% or greater or 25 mass% or greater, and 70 mass% or lower, 60 mass% or lower, 50 mass% or lower, 45 mass% or lower or 40 mass% or lower or 35 mass% or lower, as the ratio of the mass of the catalyst metal particles with respect to the total mass of the electrode catalyst.

### <Optional components>

The fuel cell electrode catalyst of the invention includes a carbon carrier and the catalyst metal particles, but may also include other optional components. Optional components to be included in the fuel cell electrode catalyst of the invention may be one or more components selected from among carbon materials other than the carbon carrier, Ir particles, Ir·Ru alloy particles, and Ir oxide. A carbon material other than the carbon carrier may be a carbon material that is not supporting the catalyst metal particles, and may be selected from among graphite, carbon fibers, carbon black, graphitized carbon black, and carbon nanotubes.

### <Usage of fuel cell electrode catalyst>

The fuel cell catalyst of the invention can be used as an electrode catalyst for a fuel cell cathode or anode, and is especially suitable as an electrode catalyst for a fuel cell cathode.

### <Method for producing fuel cell electrode catalyst>

The fuel cell electrode catalyst of the invention may be produced, for example, by a method comprising:
contacting a carbon carrier with a catalyst metal precursor,
reducing the catalyst metal precursor and supporting the catalyst metal particles on the carbon carrier to obtain an electrode catalyst precursor, and
firing the electrode catalyst precursor under conditions with an oxygen partial pressure of 4.0 Pa or higher and 800 Pa or lower, at a temperature of 300°C or higher and 1,100°C or lower.

When the catalyst metal particles are Pt particles, a Pt precursor is used as the catalyst metal precursor, contacting the carbon carrier with the Pt precursor in an appropriate solvent, after which the Pt precursor is reduced and the Pt particles are supported on the carbon carrier to obtain an electrode catalyst precursor.

The carbon carrier used may be selected to be an appropriate carbon carrier for the desired fuel cell electrode catalyst.

The Pt precursor used may be appropriately selected from among Pt compounds that are soluble in the solvent. Suitable examples of Pt precursors to be selected include PtCl₂, PtCl₄, PtBr₂, PtS, Pt(CN)₂ and PtCl₂(NH₃)₂ (dinitrodiamineplatinum).

The solvent used may be selected from among solvents that can dissolve the Pt precursor. For example, hydrochloric acid may be used when the Pt precursor is PtCl₂, an aqueous hydrobromic acid solution may be used when it is PtBr₂, an aqueous nitric acid solution may be used when it is PtCl₂(NH₃)₂, and water may be used when it is PtCl₄, PtS or Pt(CN)₂.

Reduction of the Pt precursor may be carried out using an appropriate reducing agent. The reducing agent may be ethanol, acetic acid, acetaldehyde, sodium borohydride or hydrazine, for example. The reduction may be carried out at a temperature of 10°C or higher and 100°C or lower, for a period of 0.5 hour or longer and 8 hours or less. The reduction temperature is preferably 10°C or higher and 50°C or lower when sodium borohydride is used as the reducing agent, and preferably 60°C or higher and 100°C or lower when the reducing agent is ethanol, acetic acid, acetaldehyde or hydrazine.

An electrode catalyst precursor is thus obtained having Pt particles supported on a carbon carri er.

When the catalyst metal particles are Pt alloy particles, the electrode catalyst precursor can be obtained by any of the following methods, for example.

### (1) Method of successively reducing and loading Pt and alloy metal (Method 1):

The carbon carrier and Pt precursor are contacted in an appropriate solvent, after which the Pt precursor is reduced and the Pt particles are loaded onto the carbon carrier to obtain Pt-loaded carbon;
the Pt-loaded carbon and alloy metal precursor are contacted in an appropriate solvent, after which the alloy metal precursor is reduced to obtain Pt-alloy metal-loaded carbon having the alloy metal particles supported on the Pt-loaded carbon; and
the Pt-alloy metal-loaded carbon is heated to alloy the Pt and alloy metal, thereby obtaining an electrode catalyst precursor having Pt alloy particles supported on the carbon carrier.

### (2) Method of simultaneously reducing and loading Pt and alloy metal (Method 2):

The carbon carrier, Pt precursor and alloy metal precursor are contacted in an appropriate solvent, after which the Pt precursor and alloy metal precursor are reduced to obtain Pt-alloy metal-loaded carbon having Pt particles and alloy metal particles supported on the carbon carrier (electrode catalyst precursor).

The term "alloy metal" as used herein refers to a metal other than Pt in the Pt alloy composing the catalyst metal particles.

Method 1 and Method 2 for production of an electrode catalyst precursor with Pt alloy particles as the catalyst metal particles will now be described in order.

### (1) Method of successively loading Pt and alloy metal on carbon carrier (Method 1)

In Method 1, first the carbon carrier and Pt precursor are contacted in an appropriate solvent, and then the Pt precursor is reduced and the Pt particles are loaded onto the carbon carrier to obtain Pt-loaded carbon. This step can be carried out in the same manner as for production of an electrode catalyst precursor where the catalyst metal particles are Pt particles.

Next, the obtained Pt-loaded carbon and alloy metal precursor are contacted in an appropriate solvent, after which the alloy metal precursor is reduced to obtain Pt-alloy metal-loaded carbon having alloy metal particles supported on the Pt-loaded carbon, for use as an electrode catalyst precursor.

The alloy metal precursor used may be appropriately selected depending on the type of alloy metal in the desired fuel cell electrode catalyst. The alloy metal precursor used may be appropriately selected from among compounds that include the alloy metal and are soluble in the solvent. For example, it may be a hydroxide, chloride, sulfide, nitrate, sulfate or acetate of the desired alloy metal.

The solvent used may be selected from among solvents that can dissolve the alloy metal precursor that is used. For example, the solvent may be water.

The alloy metal precursor can be reduced using an appropriate reducing agent or neutralizer. The reducing agent may be sodium borohydride, hydrazine, hydrogen gas or formic acid, for example. The neutralizer may be sodium metaborate, sodium hydroxide, sodium carbonate or ammonia, for example.

Reduction using a reducing agent may be carried out at a temperature of 10°C or higher and 100°C or lower for a period of 0.5 hour or longer and 8 hours or less. The reduction temperature is preferably 10°C or higher and 50°C or lower when sodium borohydride is used as the reducing agent, and preferably 60°C or higher and 100°C or lower when the reducing agent is ethanol, acetic acid, acetaldehyde or hydrazine.

When a neutralizer is used for reduction of the alloy metal precursor, the alloy metal may be supported on the Pt-loaded carbon in a monovalent state or higher and then heated for reduction and formation of an alloy with Pt. Reduction using a neutralizer may be carried out at a temperature of 60°C or higher and 100°C or lower for 0.5 hour or longer and 8 hours or less.

An electrode catalyst precursor is thus obtained having alloy metal particles supported on Pt-loaded carbon.

### (2) Method of simultaneously reducing and loading Pt and alloy metal (Method 2):

In method 2, an electrode catalyst precursor is obtained in the same manner as when the catalyst metal particles are Pt particles, except that when the carbon carrier and catalyst metal precursor are contacted, an alloy metal precursor is used together with the Pt precursor as the catalyst metal precursor.

The obtained electrode catalyst precursor is then fired under conditions with an oxygen partial pressure of 4.0 Pa or higher and 800 Pa or lower, and a temperature of 300°C or higher and 1, 100°C or lower, to obtain a fuel cell electrode catalyst of the invention. When the catalyst metal particles are Pt particles, this process causes growth of the catalyst metal particles while controlling the exposed Pt crystal face. When the catalyst metal particles are Pt alloy particles, the Pt and alloy metal are alloyed, and the catalyst metal particles grow while controlling the exposed Pt crystal face.

The oxygen partial pressure during firing may be 4.0 Pa or higher, 5.0 Pa or higher, 10 Pa or higher, 20 Pa or higher, 50 Pa or higher, 100 Pa or higher or 200 Pa or higher. The oxygen partial pressure during firing may also be 800 Pa or lower, 700 Pa or lower, 600 Pa or lower, 500 Pa or lower, 400 Pa or lower or 300 Pa or lower.

The atmosphere during firing may be under reduced pressure, and in the presence of an inert gas.

When the atmosphere during firing is under reduced pressure, the pressure may be 4.0 Pa or higher, 5.0 Pa or higher, 10 Pa or higher, 20 Pa or higher, 50 Pa or higher, 100 Pa or higher or 200 Pa or higher, and 900 Pa or lower, 800 Pa or lower, 700 Pa or lower, 600 Pa or lower, 500 Pa or lower or 400 Pa or lower, as the absolute pressure, from the viewpoint of controlling the oxygen partial pressure in the atmosphere to within the predetermined range.

When the atmosphere during firing is in the presence of an inert gas, the inert gas may be nitrogen, helium, neon, argon or krypton, for example. Argon is preferred as the inert gas from the viewpoint of low impurities (especially oxygen) and ready availability.

When the atmosphere during firing is in the presence of an inert gas, the firing may be carried out under an inert gas flow, or the firing may be carried out while preventing movement of the inert gas with respect to the electrode catalyst precursor. From the viewpoint of keeping the oxygen partial pressure near the electrode catalyst precursor to the desired oxygen partial pressure, it is preferred to carry out firing under an inert gas flow.

The firing temperature may be 450°C or higher, 500°C or higher, 550°C or higher or 600°C or higher, and 1,100°C or lower, 1,000°C or lower or 900°C or lower.

The firing time may be 15 minutes or longer, 30 minutes or longer, 45 minutes or longer, 1 hour or longer, 1.5 hours or longer or 2 hours or longer, and 24 hours or less, 12 hours or less, 8 hours or less, 6 hours or less or 4 hours or less.

### <Fuel cell cathode>

According to another aspect of the invention there is provided a fuel cell cathode having a catalyst layer that includes a fuel cell electrode catalyst of the invention.

The cathode may have a suitable base material layer and a catalyst layer on the base material layer, with the catalyst layer including the fuel cell electrode catalyst of the invention.

The base material layer used may be appropriately selected from among chemically and mechanically stable compounds that can withstand the fuel cell electrode catalyst and solvent, as well as the heat treatment and pressurizing treatment that are preferably carried out to form the electrode. Specific examples include polyimide, polyethylene, polypropylene, polysulfone and polytetrafluoroethylene sheets.

The catalyst layer includes the fuel cell electrode catalyst of the invention, and may further include an ionomer, and also optional components such as a binder, for example. An ionomer may be NAFION (sulfonated tetrafluoroethylene (co)polymer).

### <Fuel cell electrode assembly>

According to another aspect of the invention there is provided a fuel cell electrode assembly that includes the aforementioned cathode.

The fuel cell electrode assembly may have a structure with the cathode, solid polymer electrolyte membrane and anode stacked in that order, where the cathode may be an electrode including the fuel cell electrode catalyst of the invention.

The solid polymer electrolyte membrane and anode of the fuel cell electrode assembly may be a publicly known solid polymer electrolyte membrane and anode, respectively.

The fuel cell electrode assembly of the invention can employ as the cathode an electrode that includes an electrode catalyst for a fuel cell of the invention, or one produced by a publicly known method.

### <Fuel cell>

According to another aspect of the invention there is provided a fuel cell that includes the aforementioned fuel cell electrode assembly. The fuel cell of the invention may be a solid polymer fuel cell.

The fuel cell of the invention includes a fuel cell electrode assembly of the invention. In addition, it may have an air channel and oxygen channel on the cathode side, and a fuel channel on the anode side, for example.

The fuel cell of the invention can employ as the cathode an electrode that includes a fuel cell electrode catalyst of the invention, or one produced by a publicly known method.

### EXAMPLES

### <Example 1>

### (1) Preparation of electrode catalyst

A dispersion was obtained by dispersing 0.7 g of CB1 ("Vulcan XC72R" conductive carbon black obtained by a furnace method, product of Cabot Japan, KK., primary particle size: 30 nm, specific surface area: 231 m²/g), as a carbon carrier, in a 0.1 N concentration aqueous nitric acid solution. To this dispersion there was added a dinitrodiammineplatinum(II) nitrate solution, and the mixture was stirred for 30 minutes to obtain a liquid mixture. The amount of dinitrodiammineplatinum(II) nitrate solution added was 30 mass% as the mass ratio of Pt in terms of metal, with respect to the total mass of the carbon carrier and Pt in terms of metal.

After adding 8.4 g of ethanol as a reducing agent to the stirred liquid mixture, heated reflux was carried out for 2 hours to load the Pt onto the carbon carrier. The solid portion was recovered by filtration and washed with purified water, after which it was dried at 80°C for 15 hours to obtain a dried product.

The obtained dried product was fired for 2 hours at 700°C in a firing furnace adjusted to a furnace pressure of 5.0 Pa and a furnace oxygen partial pressure of 5.0 Pa, and then pulverized to obtain an electrode catalyst for Example 1.

### (2) Evaluation of electrode catalyst

### (2-1) Pt particle size measurement

The diffraction peak for the Pt (220) plane was fitted based on XRD measurement results for the obtained electrode catalyst, and the Scherrer formula was used to calculate the Pt particle size from the half-width.

XRD measurement was carried out under the following conditions.
Detector: "RINT-TTR III" Horizontal high-intensity sample X-ray diffractometer by Rigaku Corp.
Tube: CuK_{α} (wavelength: 1.5418 angstrom)
Output: 50 kV-300 mA
Measuring angle range (2θ): 20-90°
Sampling interval: 0.02°

### (2-2) Measurement of Pt(111) peak intensity ratio

Data was fitted for the Pt(111) plane, (200) plane and (220) plane, in the aforementioned XRD measurement. After fitting, the peak height for each peak was used to calculate the peak intensity ratio for the Pt(111) peak, using the following formula. Pt(111) peak intensity ratio = Pt(111) peak intensity/(Pt(111) peak intensity + Pt(200) peak intensity + Pt(220) peak intensity)

### (3) Evaluation of catalytic activity (specific activity)

### (3-1) Production of single cell for evaluation of catalytic activity

After dispersing the obtained electrode catalyst of Example 1 in water, ethanol was added, an aqueous dispersion containing NAFION as the ionomer was further added, and the mixture was subjected to ultrasonic dispersion to prepare a coating solution for formation of a cathode (air electrode) catalyst layer. The coating solution for formation of the cathode catalyst layer was coated onto one side of a TEFLON^{R} sheet and dried to form a cathode catalyst layer on the sheet.

A coating solution for formation of an anode (hydrogen electrode) catalyst layer was prepared in the same manner as the coating solution for formation of the cathode catalyst layer, except for using a catalyst powder having Pt supported on Ketjen Black (trade name "EC300" by Ketjen Black International Co.) instead of the electrode catalyst of Example 1, and this was used to form an anode catalyst layer on the sheet. The loading amount of Pt in the catalyst powder used in the anode catalyst layer was 30 mass% based on the mass of the catalyst powder.

TEFLON^{R} sheets with the cathode catalyst layer and anode catalyst layer were laminated against the catalyst layer-forming sides of a double-sided polymer electrolyte membrane and hot pressed for transfer, after which the TEFLON^{R} sheets were released to obtain an electrode assembly (MEA) with the cathode catalyst layer, polymer electrolyte membrane and anode catalyst layer stacked in that order. A diffusion layer was then set on the surface of each catalyst layer to produce a single cell for evaluation of catalytic activity.

### (3-2) Evaluation of catalytic activity (specific activity)

The ECSA (electrochemical surface area) of the Pt particles was determined first. An electrochemical measurement system ("HZ-5000" by Hokuto Denko Corp.) was used to supply nitrogen at a rate of 2.0 L/min to the cathode side in an environment with a cell temperature of 90°C and a humidification degree of 90%, while supplying hydrogen to the anode side at 0.5 L/min and conducting cyclic voltammetry (CV) measurement in a range of 0.01 A/cm² or higher and 1.20 A/cm² or lower, after which the hydrogen desorption wave area C value was calculated. The ECSA was calculated from the obtained C value and the Pt basis weight (m-Pt/m²-MEA) of the evaluation sample.

A fuel cell evaluation system by Toyo Technica was then used to supply air to the cathode side at 2.0 L/min, in an environment with a cell temperature of 90°C and a humidification degree of 90%, while supplying hydrogen to the anode side at 0.5 L/min, and measuring the voltage value in a current density range of 0.01 A/cm² or higher and 0.20 A/cm² or lower. The current density exhibiting a voltage of 0.9 V was determined from the data, and recorded as the catalytic activity. This value was divided by the previously obtained ECSA to calculate the specific activity (A/m²-Pt).

### <Examples 2 to 4 and Comparative Examples 1 to 5>

Electrode catalysts were prepared and evaluated in the same manner as Example 1, except that the furnace conditions (oxygen partial pressure and pressure) during firing were adjusted as listed in Table 1. The evaluation results are shown in Table 1.

### <Example 5>

An electrode catalyst was prepared and evaluated in the same manner as Example 1, except that the firing was carried out under argon flow with an oxygen partial pressure of 50 Pa. The evaluation results are shown in Table 1.

### <Comparative Example 6>

An electrode catalyst was prepared and evaluated in the same manner as Example 1, except that firing was not carried out. The evaluation results are shown in Table 1.

### <Comparative Example 7>

An electrode catalyst was prepared and evaluated in the same manner as Example 1, except that the firing temperature was 400°C. The evaluation results are shown in Table 1.

### <Examples 6 and 7, and Comparative Examples 8 and 9>

Electrode catalysts were prepared and evaluated in the same manner as Example 1, except that CB2 (Ketjen black "Ketjenblack EC600 JD" by Lion Specialty Chemicals Co., Ltd., primary particle size: 34 nm, specific surface area: 1,343 m²/g) was used as the carbon carrier, the mass ratio of Pt in terms of metal with respect to the total mass of the carbon carrier and Pt in terms of metal was 42 mass%, and the furnace conditions (oxygen partial pressure and pressure) during firing were adjusted as listed in Table 2. The evaluation results are shown in Table 2.

### <Examples 8 and 9, and Comparative Examples 10 and 11>

Electrode catalysts were prepared and evaluated in the same manner as Example 1, except that CB3 (acetylene black "Li435" by DENKA, primary particle size: 23 nm, specific surface area: 127 m²/g) was used as the carbon carrier, the mass ratio of Pt in terms of metal with respect to the total mass of the carbon carrier and Pt in terms of metal was 18 mass%, and the furnace conditions (oxygen partial pressure and pressure) during firing were adjusted as listed in Table 2. The evaluation results are shown in Table 2.

### [Table 1]

**Table 1**

| | Carbon carrier | | Catalyst metal particles | | Firing furnace conditions | | | Catalyst metal particle diameter (nm) | XRD peak intensity ratio | | | Specific activity (A/m²-Pt) |
|---|---|---|---|---|---|---|---|---|---|---|---|---|
| | Type | Specific surface area (m*²*/g) | Type | Loading weight (mass%) | O₂ partial pressure (Pa) | Pressure (Pa) | Temperature (°C) | | Pt (111) | Pt (200) | Pt (220) | |
| Example 1 | CB1 | 231 | Pt | 30 | 5.0 | 5.0 | 700 | 3.5 | 0.630 | 0.241 | 0.129 | 1.44 |
| Example 2 | CB1 | 231 | Pt | 30 | 50 | 51 | 700 | 3.6 | 0.628 | 0.242 | 0.130 | 1.57 |
| Example 3 | CB1 | 231 | Pt | 30 | 100 | 104 | 700 | 3.8 | 0.627 | 0.243 | 0.130 | 1.40 |
| Example 4 | CB1 | 231 | Pt | 30 | 500 | 600 | 700 | 3.7 | 0.627 | 0.241 | 0.132 | 1.42 |
| Example 5 | CB1 | 231 | Pt | 30 | 50 | 51 | 700 | 3.8 | 0.629 | 0.240 | 0.131 | 1.41 |
| Comp. Example 1 | CB1 | 231 | Pt | 30 | 0.2 | 0.2 | 700 | 3.2 | 0.632 | 0.239 | 0.129 | 1.29 |
| Comp. Example 2 | CB1 | 231 | Pt | 30 | 3.0 | 3.0 | 700 | 3.6 | 0.633 | 0.239 | 0.128 | 1.36 |
| Comp. Example 3 | CB1 | 231 | Pt | 30 | 1000 | 1379 | 700 | 3.7 | 0.624 | 0.242 | 0.134 | 1.25 |
| Comp. Example 4 | CB1 | 231 | Pt | 30 | 5000 | 11750 | 700 | 5.7 | 0.620 | 0.246 | 0.134 | 1.29 |
| Comp. Example 5 | CB1 | 231 | Pt | 30 | 10,000 | 29869 | 700 | 11.4 | 0.617 | 0.246 | 0.137 | 1.32 |
| Comp. Example 6 | CB1 | 231 | Pt | 30 | - | - | - | 2.3 | 0.709 | 0.180 | 0.111 | 1.20 |
| Comp. Example 7 | CB1 | 231 | Pt | 30 | 5.0 | 5.0 | 400 | 2.3 | 0.709 | 0.180 | 0.111 | 1.20 |

**Table 2**

| | Carbon carrier | | Catalyst metal particles | | Firing furnace conditions | | | Catalyst metal particle diameter (nm) | XRD peak intensity ratio | | | Specific activity (A/m²-Pt) |
|---|---|---|---|---|---|---|---|---|---|---|---|---|
| | Type | Specific surface area (m²/g) | Type | Loading weight (mass%) | O₂ partial pressure (Pa) | Pressure (Pa) | Temperature (°C) | | Pt (111) | Pt (200) | Pt (220) | |
| Example 6 | CB2 | 1343 | Pt | 42 | 12 | 13 | 700 | 3.6 | 0.627 | 0.223 | 0.149 | 1.59 |
| Example 7 | CB2 | 1343 | Pt | 42 | 600 | 700 | 700 | 3.5 | 0.627 | 0.225 | 0.148 | 1.55 |
| Comp. Example 8 | CB2 | 1343 | Pt | 42 | 0.2 | 0.2 | 700 | 3.4 | 0.631 | 0.225 | 0.145 | 1.37 |
| Comp. Example 9 | CB2 | 1343 | Pt | 42 | 1000 | 1379 | 700 | 3.7 | 0.624 | 0.228 | 0.148 | 1.34 |
| Example 8 | CB3 | 127 | Pt | 18 | 12 | 13 | 700 | 3.4 | 0.630 | 0.233 | 0.136 | 1.49 |
| Example 9 | CB3 | 127 | Pt | 18 | 600 | 700 | 700 | 3.4 | 0.626 | 0.237 | 0.137 | 1.51 |
| Comp. Example 10 | CB3 | 127 | Pt | 18 | 0.2 | 0.2 | 700 | 3.4 | 0.637 | 0.232 | 0.131 | 1.35 |
| Comp. Example 11 | CB3 | 127 | Pt | 18 | 1000 | 1379 | 700 | 3.5 | 0.623 | 0.238 | 0.140 | 1.32 |

### [Table 2]

Based on Table 1, the electrode catalysts of Examples 1 to 5, wherein the peak intensity ratio on the Pt(111) plane as the catalyst metal particles was 0.626 or higher and 0.630 or lower, were confirmed to have higher catalytic activity (specific activity) compared to the electrode catalysts of Comparative Examples 3 to 5 wherein the peak intensity ratio was lower than 0.626 or the electrode catalysts of Comparative Examples 1, 2, 6 and 7 wherein the peak intensity ratio exceeded 0.630.

An electrode catalyst which includes catalyst metal particles with a peak intensity ratio of 0.626 or higher and 0.630 or lower on the Pt(111) plane can be obtained by adjusting the oxygen partial pressure of the ambient atmosphere to 4.0 Pa or higher and 800 Pa or lower during the firing carried out after loading Pt on the carbon carrier.

With the electrode catalyst of Comparative Example 6 wherein firing was not carried out, and the electrode catalyst of Comparative Example 7 which had a low firing temperature, the peak intensity ratio on the Pt(111) plane was excessively high. This suggests that the most stable Pt(111) plane grew preferentially during reductive loading of Pt on the carbon carrier, and that the Pt(111) plane was maintained without firing or with a low firing temperature. It is thought that with firing of these electrode catalysts at a suitable temperature, the increasing particle sizes of the catalyst metal particles leads to competitive growth of the Pt(111) plane, the (200) plane (equivalent to the (100) plane) and the (220) plane (equivalent to the (110) plane).

If the oxygen partial pressure during the firing is lower than 4.0 Pa, then the peak intensity ratio on the Pt(111) plane exceeds 0.630, thus lowering the catalytic activity (Comparative Examples 1 and 2). This is attributed to the fact that the Pt(111) plane has grown excessively under low oxygen partial pressure conditions.

If the oxygen partial pressure during the firing is higher than 800 Pa, on the other hand, then the peak intensity ratio on the Pt(111) plane is lower than 0.626, thus also lowering the catalytic activity (Comparative Examples 3 to 5). This is presumably because an oxygen partial pressure of higher than 800 Pa during firing resulted in adsorption of high partial pressure oxygen on the Pt(111) plane, impeding growth on the Pt(111) plane.

It was found that when firing of the electrode catalyst was carried out under conditions with an oxygen partial pressure of higher than 1,000 Pa, the particle sizes of the catalyst metal particles increased drastically (Comparative Examples 4 and 5). This is presumably because high partial pressure oxygen resulted in combustion of the carbon carrier, leading to sintering of the catalyst metal particles.

According to Table 2, this tendency was found even when the type of carbon carrier was changed, confirming that an electrode catalyst of the invention exhibits the expected effect of the invention.

## Claims

1. A fuel cell electrode catalyst having catalyst metal particles made of Pt or Pt alloy supported on a carbon carrier,
wherein upon XRD measurement of the electrode catalyst, the peak intensity ratio on the Pt(111) plane according to the following formula is 0.626 or higher and 0.630 or lower: Pt(111) peak intensity ratio = Pt(111) peak intensity/(Pt(111) peak intensity + Pt(200) peak intensity + Pt(220) peak intensity).

2. The fuel cell electrode catalyst according to claim 1, wherein upon XRD measurement of the electrode catalyst, the peak intensity ratio on the Pt(200) plane according to the following formula is 0.240 or higher and 0.243 or lower: Pt(200) peak intensity ratio = Pt(200) peak intensity/(Pt(111) peak intensity + Pt(200) peak intensity + Pt(220) peak intensity).

3. The fuel cell electrode catalyst according to claim 1, wherein upon XRD measurement of the electrode catalyst, the peak intensity ratio on the Pt(220) plane according to the following formula is 0.129 or higher and 0.132 or lower: Pt(220) peak intensity ratio = Pt(220) peak intensity/(Pt(111) peak intensity + Pt(200) peak intensity + Pt(220) peak intensity).

4. The fuel cell electrode catalyst according to any one of claims 1 to 3, wherein the mean particle size of the catalyst metal particles is 3.0 nm or larger and 5.0 nm or smaller.

5. The fuel cell electrode catalyst according to any one of claims 1 to 3, wherein the carbon carrier consists of conductive carbon black particles obtained by the furnace method.

6. The fuel cell electrode catalyst according to any one of claims 1 to 3, wherein the loading amount of the catalyst metal particles is 1.0 mass% or greater and 50 mass% or less, as represented by the ratio of the mass of the catalyst metal particles with respect to the total mass of the electrode catalyst.

7. A fuel cell cathode having a catalyst layer that includes a fuel cell electrode catalyst according to any one of claims 1 to 3.

8. A fuel cell electrode assembly that includes a cathode according to claim 7.

9. A fuel cell that includes a fuel cell electrode assembly according to claim 8.

10. A method for producing a fuel cell electrode catalyst, the method comprising:
contacting a carbon carrier with a catalyst metal precursor,
reducing the catalyst metal precursor and supporting the catalyst metal particles on the carbon carrier to obtain an electrode catalyst precursor, and
firing the electrode catalyst precursor under conditions with an oxygen partial pressure of 4.0 Pa or higher and 800 Pa or lower, at a temperature of 500°C or higher and 1,100°C or lower.

11. The method for producing a fuel cell electrode catalyst according to claim 10, wherein the firing is carried out under reduced pressure.

12. The method for producing a fuel cell electrode catalyst according to claim 10, wherein the firing is carried out under an inert gas flow.
